# EUROPEAN PATENT APPLICATION

(11) **EP 4 530 094 A1**
(43) Date of publication of application: **02.04.2025**
(21) Application number: 24202888.4
(22) Date of filing: 26.09.2024
(51) Int. Cl.: B60C 1/00, C08C 19/22, C08C 19/25, C08C 19/44

(54) **METHOD OF PRODUCING FUNCTIONALIZED POLYMERS, RUBBER COMPOSITION, AND PNEUMATIC TIRE**

(30) Priority: 28.09.2023 US 202318476714
(71) Applicant: The Goodyear Tire & Rubber Company, Akron, OH 44316 (US)
(72) Inventor: NOYES, Kelsey Elizabeth, Canton, Ohio, 44718 (US); MURRAY, Aaron Patrick, Chardon, 44024 (US)
(74) Representative: Kutsch, Bernd

(57) **Abstract**

A process for producing a functionalized polymer is disclosed. The process comprises: producing an aminosilane functionalized polymer in a polymer cement; and reacting a condensation suppressant comprising an alkoxysilane with the aminosilane functionalized polymer to form a stable functionalized polymer in the polymer cement. Also, process for producing a functionalized polymer is disclosed comprising: reacting a condensation suppressant comprising an alkoxysilane with an aminosilane functionalized polymer to form a stable functionalized polymer in the polymer cement. Further, a rubber composition is disclosed comprising the produced functionalized polymer and a pneumatic tire comprising the rubber composition.

## Description

### BACKGROUND

Silane functionalized polymers can hydrolyze and condense significantly through finishing when exposed to water, heat, and work. It is known that condensation of functional groups in the polymers results in coupling. The degree of coupling directly correlates to an increase in polymer Mooney viscosity. Silane functional groups bearing electron-withdrawing groups, including alkoxy and amino groups, are particularly susceptible to hydrolysis and condensation. Some silane-functionalized polymers condense to such a degree that they are unusable in their targeted applications.

It would be desirable to develop new methods for controlling such condensation.

### SUMMARY OF THE INVENTION

The invention relates to a process for producing a functionalized polymer in accordance with claims 1 or 14, respectively, to a rubber composition in accordance with claim 11 and to a pneumatic tire in accordance with claim 13.

Dependent claims refer to preferred embodiments of the invention.

By adding an alkoxysilane to in-process polymer cement after the silane is attached and polymerization is complete, it is possible to mitigate and control hydrolysis and condensation, thereby controlling polymer coupling and final polymer Mooney viscosity. Such control enables a greater range of useful functional polymers across multiple industries. Non-limiting examples of suitable alkoxysilanes include triethoxy(octyl)silane and 3-octanoylthio-1-propyl triethoxysilane. The alkoxysilane functions as a condensation suppressant.

Disclosed, in some embodiments, is a process for producing a functionalized polymer. The process includes producing an aminosilane functionalized polymer in a polymer cement; and reacting a condensation suppressant comprising an alkoxysilane with the aminosilane functionalized polymer to form a stable functionalized polymer in the polymer cement.

The process may further include providing a quenching agent to the polymer cement; removing volatile compounds from the polymer cement; and/or drying the polymer cement and recovering the stable functionalized polymer.

In some embodiments, the alkoxysilane is a triethoxysilane.

The alkoxysilane may be selected from triethyloxy(octyl) silane and 3-(triethoxysilyl)propyl thiooctanoate.

In some embodiments, the stable functionalized polymer has a 21-day aged Mooney viscosity of less than 100, less than 80, or less than 60.

The aminosilane functionalized polymer may be produced by reacting a living anionic elastomeric polymer and a polymerization terminator of formula I 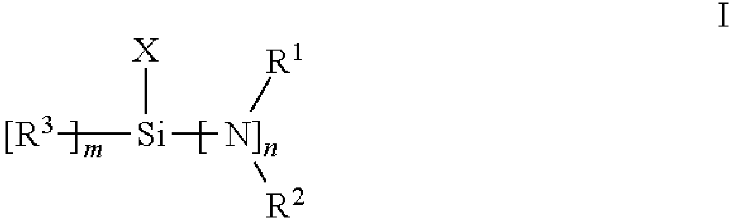 wherein X is Cl, Br, or I; m is an integer from 0 to 2, n is an integer from 1 to 3, with the proviso that n+m=3; R¹, R² are independently C1 to C18 alkyl, aryl, or a combination thereof, or R¹, R² are independently -SiR₃ where R is independently alkyl, aryl, alkoxy, or disubstituted amino, or R¹ and R² taken together with their common nitrogen atom and optionally a sulfur or oxygen heteroatom to form a five to eight membered ring; R³ is hydrogen, or C1 to C18 alkyl, aryl, or a combination thereof, or R³ is -SiR₃ where R is independently alkyl, aryl, alkoxy, or disubstituted amino, or R³ is -R⁶-R⁷, where R⁶ is C1 to C3 alkanediyl and R⁷ is selected from the following structures -S-Z, -N(R⁸)(R⁹), -O(Y), or Si(OR¹⁰)₃, where R⁸ and R⁹ are independently C1 to C18 alkyl, aryl, or a combination thereof, Y and Z are independently selected from the group consisting of methoxymethyl, tetrahydropyranyl, tetrahydrothiopyranyl, tetrahydrofuranyl, tert-butyl, allyl, 1-ethoxyethyl, benzyl, triphenylmethyl, triethylsilyl, triisopropylsilyl, trimethylsilyl, tert-butyl dimethyl silyl, tert-butyl diphenyl silyl, and isopropyldimethylsilyl, and R¹⁰ are independently C1 to C4 alkyl; or when m=1, the polymerization terminator may have the formula II 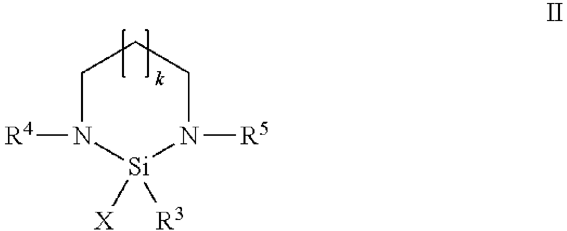 wherein R⁴, R⁵ are independently C1 to C18 alkyl, aryl, or a combination thereof, or R⁴, R⁵ are independently -SiR₃ where R is independently alkyl, aryl, alkoxy, or disubstituted amino, X and R³ are as defined previously, and k is an integer from 0 to 10.

In some embodiments, the polymerization terminator is selected from the group consisting of:

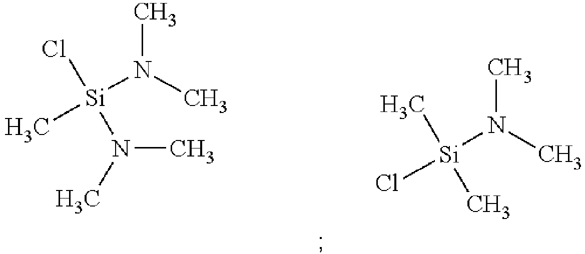

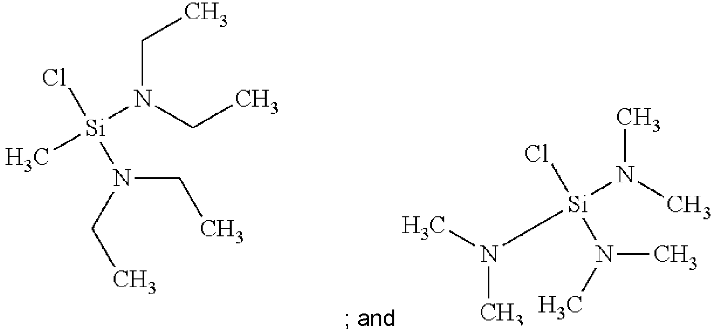

The living anionic elastomer may be derived from at least one diene monomer and optionally at least one vinyl aromatic monomer.

In some embodiments, the living anionic elastomer is derived from at least one of isoprene and butadiene, and optionally from styrene.

The living anionic elastomer may be derived from butadiene and styrene.

Rubber compositions containing the functionalized polymer produced by the aforementioned process are also disclosed. The compositions may further contain silica. Pneumatic tires containing the rubber compositions are also disclosed.

Disclosed, in other embodiments, is a process for producing a functionalized polymer including reacting a condensation suppressant comprising an alkoxysilane with an aminosilane functionalized polymer to form a stable functionalized polymer in the polymer cement.

### BRIEF DESCRIPTION OF THE DRAWINGS

The following is a brief description of the drawings, which are presented for the purposes of illustrating the exemplary embodiments disclosed herein and not for the purposes of limiting the same.
FIG. 1 is a flow chart illustrating a process for producing a functionalized polymer in accordance with some embodiments of the present disclosure.
FIG. 2 is a partial side view of a non-limiting example of a tire in accordance with some embodiments of the present disclosure.
FIG. 3 is a flow chart illustrating a non-limiting example of an article formation process in accordance with some embodiments of the present disclosure.

### DETAILED DESCRIPTION OF PREFERRED EMBODIMENTS OF THE INVENTION

The present disclosure may be understood more readily by reference to the following detailed description of desired embodiments included therein and the drawings. In the following specification and the claims which follow, reference will be made to a number of terms which shall be defined to have the following meanings.

Unless otherwise defined, all technical and scientific terms used herein have the same meaning as commonly understood by one of ordinary skill in the art. In case of conflict, the present document, including definitions, will control. Methods and materials are described below, although methods and materials similar or equivalent can be used in practice or testing of the present disclosure. All publications, patent applications, patents, and other references mentioned herein are incorporated by reference in their entirety. The materials, methods, and articles disclosed herein are illustrative only and not intended to be limiting.

The singular forms "a," "an," and "the" include plural referents unless the context clearly dictates otherwise.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases that require the presence of the named ingredients/steps and permit the presence of other ingredients/steps. However, such description should be construed as also describing compositions, mixtures, or processes as "consisting of" and "consisting essentially of" the enumerated ingredients/steps, which allows the presence of only the named ingredients/steps, along with any impurities that might result therefrom, and excludes other ingredients/steps.

Unless indicated to the contrary, the numerical values in the specification should be understood to include numerical values which are the same when reduced to the same number of significant figures and numerical values which differ from the stated value by less than the experimental error of the conventional measurement technique of the type used to determine the particular value.

All ranges disclosed herein are inclusive of the recited endpoint and independently combinable (for example, the range of "from 2 to 10" is inclusive of the endpoints, 2 and 10, and all the intermediate values). The endpoints of the ranges and any values disclosed herein are not limited to the precise range or value; they are sufficiently imprecise to include values approximating these ranges and/or values.

For the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated.

The present disclosure relates to processes for producing functionalized polymers. Rubber compositions containing the functionalized polymers and pneumatic tires containing the rubber compositions are also disclosed.

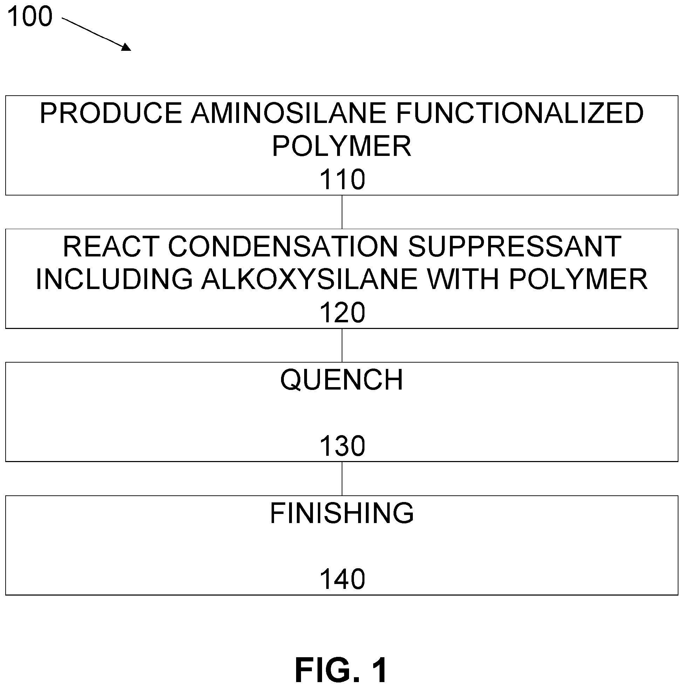

FIG. 1 is a flow chart illustrating a process 100 for producing a functionalized polymer in accordance with some embodiments of the present disclosure.

The process 100 includes producing an aminosilane functionalized polymer 110, reacting a condensation suppressant including an alkoxysilane (e.g., an ethoxysilane) with the aminosilane functionalized polymer 120, quenching 130, and finishing 140.

The reaction of the condensation suppressant including the alkoxysilane with the aminosilane functionalize polymer 120 enables mitigation and control of hydrolysis and condensation.

The alkoxysilane may include one or more of a monoethoxysilane, a diethoxysilane, a triethoxysilane, and/or a tetraethoxysilane. In some preferred embodiments, the alkoxysilane is an ethoxysilane, which may include one or more of a monoethoxysilane, a diethoxysilane, a triethoxysilane, and/or a tetraethoxysilane.

The alkoxysilane may be selected from triethyloxy(octyl) silane and/or 3-(triethoxysilyl)propyl thiooctanoate.

The condensation suppressant composition containing the alkoxysilane may be introduced simultaneously with an acidic proton source (e.g., stearic acid). The acid source promotes hydrolysis and condensation between the functionally-terminated polymer and the condensation suppressant. The acid source may be provided in the same composition as the alkoxysilane or in a separate stream.

Quenching 130 may be performed to "kill" any remaining living polymer chains (e.g., living polydiene chains). This can be accomplished for example by adding an acidic proton source and a protic quench agent. An antioxidant may also be added. Non-limiting examples of protic quench agents include water and alcohols (e.g., methanol or ethanol). The ordinarily skilled artisan, with knowledge of the present disclosure, is capable of choosing quenching materials and their relative amounts.

Finishing 140 may include removing volatiles and/or drying the finished polymer. The ordinarily skilled artisan, with knowledge of the present disclosure, is capable of selecting finishing parameters.

Although the present application discloses examples including aminochlorosilanes, it should be understood that any end-terminated aminosilane-bearing functional group is also within the scope of the present disclosure. The aminosilane functionalized polymer may be produced 110 as the reaction product of a living anionic elastomeric polymer and a polymerization terminator of formula I 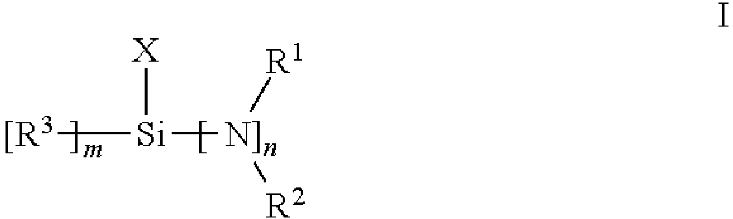 wherein X is Cl, Br, or I; m is an integer from 0 to 2, n is an integer from 1 to 3, with the proviso that n+m=3; R¹, R² are independently C1 to C18 alkyl, aryl, or a combination thereof, or R¹, R² are independently -SiR₃ where R is independently alkyl, aryl, alkoxy, or disubstituted amino, or R¹ and R² taken together with their common nitrogen atom and optionally a sulfur or oxygen heteroatom to form a five to eight membered ring; R³ is hydrogen, or C1 to C18 alkyl, aryl, or a combination thereof, or R³ is -SiR₃ where R is independently alkyl, aryl, alkoxy, or disubstituted amino, or R³ is -R⁶-R⁷, where R⁶ is C1 to C3 alkanediyl and R⁷ is selected from the following structures -S-Z, -N(R⁸)(R⁹), -O(Y), or Si(OR¹⁰)₃, where R⁸ and R⁹ are independently C1 to C18 alkyl, aryl, or a combination thereof, Y and Z are independently selected from the group consisting of methoxymethyl, tetrahydropyranyl, tetrahydrothiopyranyl, tetrahydrofuranyl, tert-butyl, allyl, 1-ethoxyethyl, benzyl, triphenylmethyl, triethylsilyl, triisopropylsilyl, trimethylsilyl, tert-butyl dimethyl silyl, tert-butyl diphenyl silyl, and isopropyldimethylsilyl, and R¹⁰ are independently C1 to C4 alkyl; or when m=1, the polymerization terminator may have the formula II 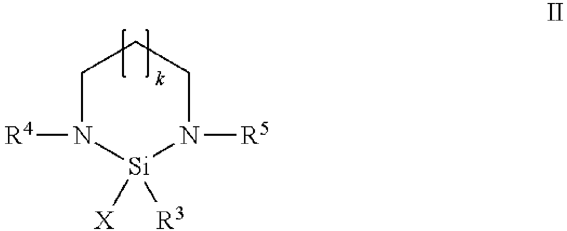 wherein R⁴, R⁵ are independently C1 to C18 alkyl, aryl, or a combination thereof, or R⁴, R⁵ are independently -SiR₃ where R is independently alkyl, aryl, alkoxy, or disubstituted amino, X and R³ are as defined previously, and k is an integer from 0 to 10.

There is further disclosed a rubber composition comprising the functionalized elastomer, and a pneumatic tire comprising the polymer.

The initiator used to initiate the polymerization employed in synthesizing the living rubbery polymer may be selected from the group consisting of barium, lithium, magnesium, sodium, and potassium. Lithium and magnesium are the metals that are most commonly utilized in the synthesis of such metal terminated polymers (living polymers). Normally, lithium initiators are more preferred.

Organolithium compounds are the preferred initiators for utilization in such polymerizations. The organolithium compounds which are utilized as initiators are normally organo monolithium compounds. The organolithium compounds which are preferred as initiators are monofunctional compounds which can be represented by the formula: R-Li, wherein R represents a hydrocarbyl radical containing from 1 to 20 carbon atoms. Generally, such monofunctional organolithium compounds will contain from 1 to 10 carbon atoms. Some representative examples of preferred butyllithium, secbutyllithium, n-hexyllithium, n-octyllithium, tertoctyllithium, n-decyllithium, phenyllithium, 1-naphthyllithium, 4-butylphenyllithium, p-tolyllithium, 4-phenylbutyllithium, cyclohexyllithium, 4-butylcyclohexyllithium, and 4-cyclohexylbutyllithium. Secondary-butyllithium is a highly preferred organolithium initiator. Very finely divided lithium having an average particle diameter of less than 2 microns can also be employed as the initiator for the synthesis of living rubbery polymers that can be functionalized with a terminator of formula I. U.S. Pat. No. 4,048,420, describes the synthesis of lithium terminated living polymers utilizing finely divided lithium as the initiator. Lithium amides can also be used as the initiator in the synthesis of living polydiene rubbers (see U.S. Pat. No. 4,935,471 with respect to lithium amides that can be used as initiators in the synthesis of living rubbery polymer).

The amount of organolithium initiator utilized will vary depending upon the molecular weight which is desired for the rubbery polymer being synthesized as well as the precise polymerization temperature which will be employed. The precise amount of organolithium compound required to produce a polymer of a desired molecular weight can be easily ascertained by persons skilled in the art. However, as a general rule from 0.01 to 1 phm (parts per 100 parts by weight of monomer) of an organolithium initiator will be utilized. In most cases, from 0.01 to 0.1 phm of an organolithium initiator will be utilized with it being preferred to utilize 0.025 to 0.07 phm of the organolithium initiator.

Many types of unsaturated monomers which contain carbon-carbon double bonds can be polymerized into polymers using such metal catalysts. Elastomeric or rubbery polymers can be synthesized by polymerizing diene monomers utilizing this type of metal initiator system. The diene monomers that can be polymerized into synthetic rubbery polymers can be either conjugated or nonconjugated diolefins. Conjugated diolefin monomers containing from 4 to 8 carbon atoms are generally preferred. Vinyl-substituted aromatic monomers can also be copolymerized with one or more diene monomers into rubbery polymers, for example styrene-butadiene rubber (SBR). Some representative examples of conjugated diene monomers that can be polymerized into rubbery polymers include 1,3-butadiene, isoprene, 1,3-pentadiene, 2,3-dimethyl-1,3-butadiene, 2-methyl1,3-pentadiene, 2,3-dimethyl-1,3-pentadiene, 2-phenyl-1,3-butadiene, and 4,5-diethyl-1,3-octadiene. Some representative examples of vinyl-substituted aromatic monomers that can be utilized in the synthesis of rubbery polymers include styrene, 1-vinylnapthalene, 3-methylstyrene, 3,5-diethylstyrene, 4-propylstyrene, 2,4,6-trimethylstyrene, 4-dodecylstyrene, 3-methyl-5-normal-hexylstyrene, 4-phenylstyrene, 2-ethyl-4-benzylstyrene, 3,5-diphenylstyrene, 2,3,4,5-tetraethylstyrene, 3-ethyl-1-vinylnapthalene, 6-isopropyl-1-vinylnapthalene, 6-cyclohexyl-1-vinylnapthalene, 7-dodecyl-2-vinylnapthalene, and a-methylstyrene.

The metal terminated rubbery polymers that are functionalized with a terminator of formula I may be prepared by solution polymerizations that utilize inert organic solvents, such as saturated aliphatic hydrocarbons, aromatic hydrocarbons, or ethers. The solvents used in such solution polymerizations will normally contain from 4 to 10 carbon atoms per molecule and will be liquids under the conditions of the polymerization. Some representative examples of suitable organic solvents include pentane, isooctane, cyclohexane, normal-hexane, benzene, toluene, xylene, ethylbenzene, and tetrahydrofuran, alone or in admixture. For instance, the solvent can be a mixture of different hexane isomers. Such solution polymerizations result in the formation of a polymer cement (a highly viscous solution of the polymer). The polymerization may include a modifier such as methyltetrahydrofurfuryl ether, ethyltetrahydrofurfuryl ether, propyltetrahydrofurfuryl ether, butyltetrahydrofurfuryl ether, hexyltetrahydrofurfuryl ether, octyltetrahydrofurfuryl ether, dodecyltetrahydrofurfuryl ether, diethyl ether, di-n-propyl ether, diisopropyl ether, di-n-butyl ether, tetrahydrofuran, dioxane, ethylene glycol dimethyl ether, ethylene glycol diethyl ether, diethylene glycol dimethyl ether, diethylene glycol diethyl ether, triethylene glycol dimethyl ether, trimethylamine, triethylamine, N,N,N',N'-tetramethylethylenediamine (TMEDA), N-methyl morpholine, N-ethyl morpholine, N-phenyl morpholine, or an oligomeric oxolanyl alkane such as 2,2-di-tetrahydrofuryl propane (DTP.)

The metal terminated living rubbery polymers can be of virtually any molecular weight. However, the number average molecular weight of the living rubbery polymer will typically be within the range of 50,000 to 500,000. It is more typical for such living rubbery polymers to have number average molecular weights within the range of 100,000 to 250,000.

The metal terminated living rubbery polymer can be functionalized by simply adding a stoichiometric amount of a terminator of formula I or II to a solution of the rubbery polymer (a rubber cement of the living polymer). In other words, approximately one mole of the terminator of formula I or II is added per mole of terminal metal groups in the living rubbery polymer. The number of moles of metal end groups in such polymers is assumed to be the number of moles of the metal utilized in the initiator. It is, of course, possible to add greater than a stoichiometric amount of the terminator of formula I or II. However, the utilization of greater amounts is not beneficial to final polymer properties. Nevertheless, in many cases it will be desirable to utilize a slight excess of the terminator of formula I or II to ensure that at least a stoichiometric amount is actually employed or to control the stoichiometry of the functionalization reaction. In one embodiment, from 0.05 to 5 moles of the terminator of formula I or II will be utilized per mole of metal end groups in the living polymer being treated (mole equivalents). In one embodiment, from 0.8 to 1.1 moles of the terminator of formula I or II will be utilized per mole of metal end groups in the living polymer being treated. In the event that it is not desired to functionalize all of the metal terminated chain ends in a rubbery polymer then, of course, lesser amounts of the terminator of formula I or II can be utilized.

The terminator of formula I or II will react with the metal terminated living rubbery polymer over a very wide temperature range. For practical reasons, the functionalization of such living rubbery polymers will normally be carried out at a temperature within the range of 0° C to 150° C. In order to increase reaction rates, in most cases it will be preferred to utilize a temperature within the range of 20° C. to 100° C. with temperatures within the range of 50° C. to 80° C. being most preferred. The capping reaction is very rapid and only very short reaction times within the range of 0.05 to 4 hours are normally required. However, in some cases reaction times of up to about 24 hours may be employed to ensure maximum conversions.

In various embodiments, suitable terminators include the following structures 1-4:

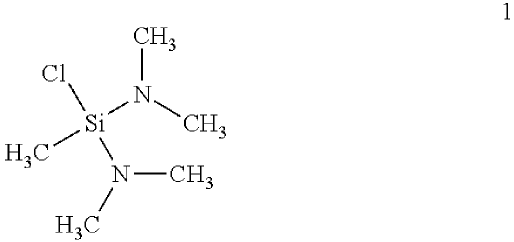

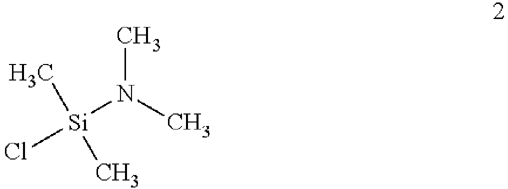

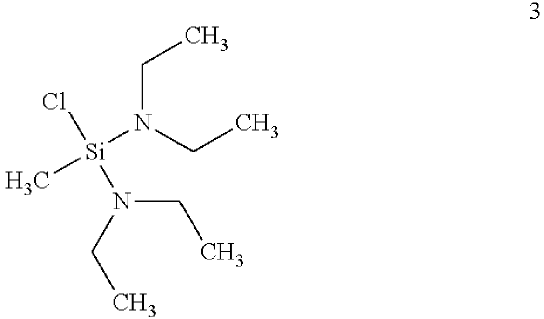

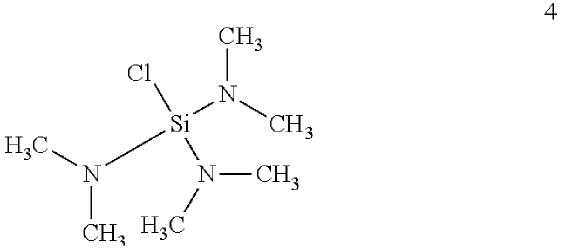

The polymer may be compounded into a rubber composition.

The rubber composition may optionally include, in addition to the polymer, one or more rubbers or elastomers containing olefinic unsaturation. The phrases "rubber or elastomer containing olefinic unsaturation" or "diene-based elastomer" are intended to include both natural rubber and its various raw and reclaim forms as well as various synthetic rubbers. In the description, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In some embodiments, at least one additional rubber is preferably of at least two of diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers, and emulsion polymerization prepared butadiene/acrylonitrile copolymers.

In some embodiments, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene-based rubbers.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed are precipitated silicas such as, for example, those obtained by the acidification of a soluble silicate, e.g., sodium silicate.

Such conventional silicas might be characterized, for example, by having a BET (Brunauer-Emmett-Teller) surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP and Z165GR. and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra-high molecular weight polyethylene (UHMWPE), crosslinked particulate polymer gels including but not limited to those disclosed in U.S. Pat. Nos. 6,242,534; 6,207,757; 6,133,364; 6,372,857; 5,395,891; or 6,127,488, and plasticized starch composite filler including that disclosed in U.S. Pat. No. 5,672,639. Such other fillers may be used in an amount ranging from 1 to 30 phr.

In some embodiments, the rubber composition may contain a conventional sulfur containing organosilicon compound. In one embodiment, the sulfur containing organosilicon compounds are the 3,3'-bis(trimethoxy or triethoxy silylpropyl) polysulfides.

In one embodiment, the sulfur containing organosilicon compounds are 3,3'-bis(triethoxysilylpropyl) disulfide and/or 3,3'-bis(triethoxysilylpropyl) tetrasulfide.

In some embodiments, suitable sulfur containing organosilicon compounds include compounds disclosed in U.S. Pat. No. 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used include amines, disulfides, guanidines, thioureas, thiazoles, thiurams, sulfenamides, dithiocarbamates and xanthates. In one embodiment, the primary accelerator is a sulfenamide If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art. The rubber composition may be subjected to a thermomechanical mixing step. The thermomechanical mixing step generally comprises a mechanical working in a mixer or extruder for a period of time suitable in order to produce a rubber temperature between 140° C. and 190° C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire may be a race tire, passenger tire, aircraft tire, agricultural, earthmover, off-the-road, or truck tire. In one embodiment, the tire is a passenger or truck tire. The tire may also be a radial or bias.

The rubber composition may also be used in other products such as non-pneumatic tires, belts, hoses, shoes, airsprings, and engine mounts.

Vulcanization of the pneumatic tire may be carried out at conventional temperatures ranging from 100° C to 200° C. In one embodiment, the vulcanization is conducted at temperatures ranging from 110° C to 180° C. Any of the usual vulcanization processes may be used such as heating in a press or mold, heating with superheated steam or hot air. Such tires can be built, shaped, molded and cured by various methods which are known and will be readily apparent to those having skill in such art.

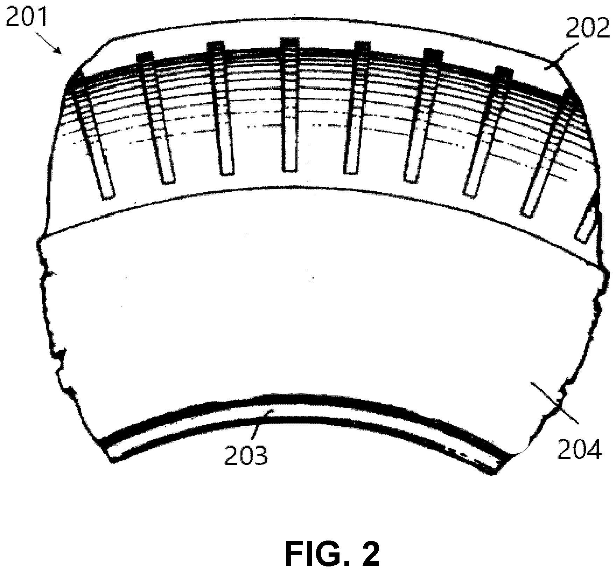

FIG. 2 is a partial side view of a non-limiting example of a tire 201 in accordance with some embodiments of the present disclosure. The tire 201 includes a tread portion 202, a bead portion 203, and a sidewall portion 204 located between the tread portion 202 and the bead portion 203. The tread portion 202, bead portion 203, and sidewall portion 204 of tires in accordance with the present disclosure are not limited to the particular configuration depicted in FIG. 2. For example, there may be multiple sidewall portions, ribs, patterns, colors, etc. FIG. 2 is provided to illustrate one example of where the composition of the present disclosure may be utilized. The functionalized polymer may be utilized in one or more of the tread portion 202, bead portion 203, and sidewall portion 204.

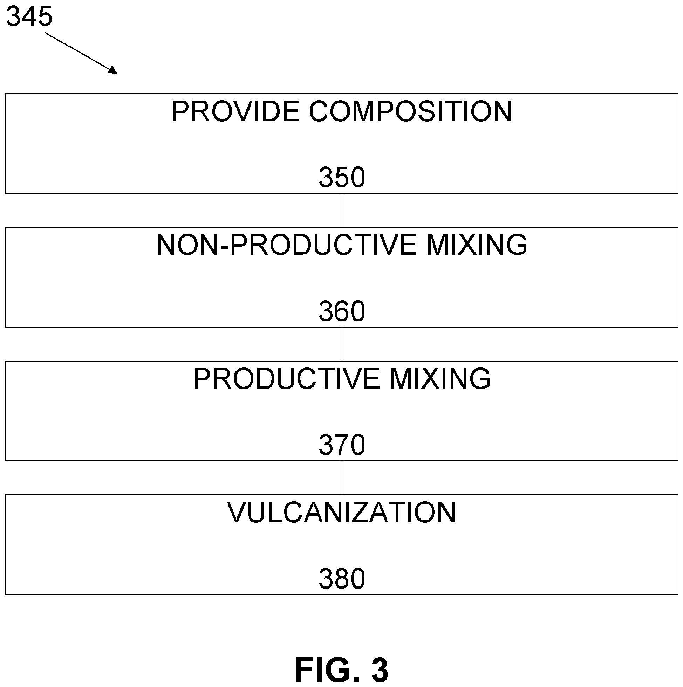

FIG. 3 is a flow chart illustrating an example of a process 345 of forming an article (e.g., a tire) in accordance with some embodiments of the present disclosure. The process 345 includes providing the composition 350, non-productive mixing 360, productive mixing 370, and vulcanization 380.

The following examples are provided to illustrate the devices and methods of the present disclosure.

### EXAM PLES

For the following examples, to reduce batch variation between polymers that results naturally from running polymerization reactions, a 27-gallon batch reactor (1 gallon = 3.785 liter) was used to produce the aminosilane functionalized polymer, as described in Example 1. This single batch was then split into several smaller reactors for the post-functionalization treatment experiments.

### Example 1

This example describes the production of the single batch, aminosilane functionalized polymer that was subsequently divided among Examples 2-5. To a 27-gallon reactor was added a solution of 1,3-butadiene and vinyl content modifier in n-hexane, with a 65°C reactor temperature. To this solution was charged a solution of n-butyl lithium (0.05phm). After monomer conversion reached 98-99%, as measured by GC-MS, a solution of bis(dimethylamino)methylchlorosilane (1.0eq versus n-BuLi) (aminosilane) functional terminator was added. The functionalization reaction was allowed a residence time to proceed to completion. The resulting polymer cement was divided for use in the subsequent examples.

### Example 2

In this example, a comparative example was generated to illustrate the unmitigated Mooney jump in an aminosilane functionalized polymer without post-functionalization treatment to mitigate the hydrolysis and condensation reactions of the functional end groups. The aminosilane functionalized polymer cement produced by Example 1 was quenched using a protic shortstop, and antioxidant was added. The resulting cement was finished using procedures familiar to those experienced in the art to strip the cement of volatiles and dry the finished polymer. An aging study was performed on the resulting polymer to track Mooney changes over time.

### Example 3

In this example, a comparative example was generated to illustrate the Mooney jump in an aminosilane functionalized polymer when that polymer is subjected to classical post-functionalization treatment to accelerate the hydrolysis and condensation reactions of the aminosilane end groups. To the aminosilane functionalized polymer cement produced by Example 1 was added a solution of an acidic proton source and protic quench agent to accelerate the hydrolysis and condensation reactions toward completion, followed by addition of the antioxidant. The resulting cement was finished using procedures familiar to those experienced in the art to strip the cement of volatiles and dry the finished polymer. An aging study was performed on the resulting polymer to track Mooney changes over time.

### Example 4

This example describes the use of triethyloxy(octyl) silane as condensation suppressant for post-functionalization treatment. To the aminosilane functionalized polymer cement produced by Example 1 was added a solution of triethyloxy(octyl) silane. This mixture was allowed a short residence time (e.g., 10 to 40 minutes) before adding the protic quench agent and the antioxidant (which may be added in the same step or a separate step as the quench agent). The resulting cement was finished using procedures familiar to those experienced in the art to strip the cement of volatiles and dry the finished polymer. An aging study was performed on the resulting polymer to track Mooney changes over time.

### Example 5

This example describes the use of 3-(triethoxysilyl)propyl thiooctanoate as a hydrolysis / condensation mitigating agent for post-functionalization treatment. To the aminosilane functionalized polymer cement produced by Example 1 was added a solution of 3-(triethoxysilyl)propyl thiooctanoate. This mixture was allowed a short residence time before adding the protic quench agent and the antioxidant. The resulting cement was finished using procedures familiar to those experienced in the art to strip the cement of volatiles and dry the finished polymer. An aging study was performed on the resulting polymer to track Mooney changes over time.

### Results

Table 1 summarizes the results of Examples 2-5.

**Table 1**

| Example | Pre-Mitigation Agent Mooney Viscosity | Finished Mooney Viscosity | 21-Day Aged Mooney Viscosity |
|---|---|---|---|
| 2 | 25.0 | 40.0 | 134 |
| 3 | 26.4 | 67.3-115 | 132 |
| 4 | 28.5 | 46.6 | 52.6 |
| 5 | 25.9 | 30.0 | 48.5 |

As illustrated by these examples and the resulting polymer Mooney changes through the process, a clear difference is observed between comparative Example 2 and comparative Example 3. Example 2 demonstrates that despite the apparently acceptable finished Mooney, the hydrolysis and condensation reactions of the aminosilane functional end group are incomplete, as evidenced by the extreme Mooney increase on aging as these reactions proceed to completion in the bulk polymer. Example 3 demonstrates that classical hydrolysis and condensation acceleration agents will give either a partially or nearly completely coupled polymer product as the polymer chains condense with each other. The aged Mooney of these products are near the upper limit of what a Mooney viscometer can accurately detect. Another problem is that these materials behave as their measured viscosities, meaning they do not breakdown in a mixer during compounding to behave or perform as lower Mooney polymers.

Conversely, Example 4 and Example 5 demonstrate the use of hydrolysis mitigation agents. As evidenced by the small increase in polymer Mooney on finishing, some hydrolysis and condensation still take place. However, due to the reaction between the polymer's aminosilane end group and the ethoxysilane-containing mitigating agent of choice [triethyloxy(octyl) silane in Example 4 and 3-(triethoxysilyl)propyl thiooctanoate in Example 5], the functionalized polymer is less able to condense with other polymer functional end groups, thereby preventing coupling. This directly prevents a rise in finished and aged polymer Mooney, as observed in Table 1.

Therefore, those functional polymers treated with hydrolysis / condensation mitigating agents retain a lower viscosity for improved aging and improved compound performance.

## Claims

1. A process for producing a functionalized polymer, the process comprising: producing an aminosilane functionalized polymer in a polymer cement; and reacting a condensation suppressant comprising an alkoxysilane with the aminosilane functionalized polymer to form a stable functionalized polymer in the polymer cement.

2. The process of claim 1, further comprising: providing a quenching agent to the polymer cement and/or removing volatile compounds from the polymer cement.

3. The process of claim 1 or 2, further comprising: drying the polymer cement and recovering the stable functionalized polymer.

4. The process of at least one of the previous claims, wherein the alkoxysilane comprises a triethoxysilane or wherein the alkoxysilane comprises triethyloxy(octyl) silane or 3-(triethoxysilyl)propyl thiooctanoate.

5. The process of at least one of the previous claims, wherein the stable functionalized polymer has a 21-day aged Mooney viscosity, measured according to ISO 188:2023, of less than 100, preferably less than 80 or less than 60.

6. The process of at least one of the previous claims, wherein the aminosilane functionalized polymer is produced by reacting a living anionic elastomeric polymer and a polymerization terminator of formula I 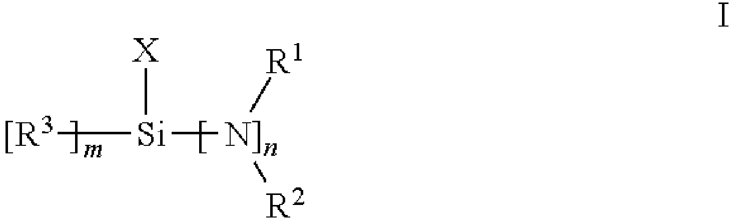 wherein X is Cl, Br, or I; m is an integer from 0 to 2, n is an integer from 1 to 3, with the proviso that n+m=3; R¹, R² are independently selected as a C1 to a C18 alkyl, aryl or a combination thereof or R¹, R² are independently selected as -SiR₃ where R is independently selected as alkyl, aryl, alkoxy, or disubstituted amino, or R¹ and R² taken together with their common nitrogen atom and optionally a sulfur or oxygen heteroatom to form a five to eight membered ring; R³ is hydrogen, or C1 to C18 alkyl, aryl, or a combination thereof, or R³ is -SiR₃ where R is independently alkyl, aryl, alkoxy, or disubstituted amino, or R³ is -R⁶-R⁷, where R⁶ is C1 to C3 alkanediyl and R⁷ is selected from the following structures -S-Z, -N(R⁸)(R⁹), -O(Y), or Si(OR¹⁰)₃, where R⁸ and R⁹ are independently C1 to C18 alkyl, aryl, or a combination thereof, Y and Z are independently selected from the group consisting of methoxymethyl, tetrahydropyranyl, tetrahydrothiopyranyl, tetrahydrofuranyl, tert-butyl, allyl, 1-ethoxyethyl, benzyl, triphenylmethyl, triethylsilyl, triisopropylsilyl, trimethylsilyl, tert-butyl dimethyl silyl, tert-butyl diphenyl silyl, and isopropyldimethylsilyl, and R¹⁰ are independently C1 to C4 alkyl; or when m=1, the polymerization terminator may have the formula II 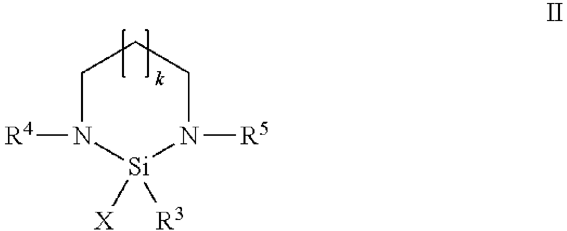 wherein R⁴, R⁵ are independently iselected as C1 to C18 alkyl, aryl, or a combination thereof, or R⁴, R⁵ are independently selected as -SiR₃ where R is independently alkyl, aryl, alkoxy, or disubstituted amino, X and R³ are as defined previously, and k is an integer from 0 to 10.

7. The process of at least one of the previous claims, wherein the polymerization terminator is selected from the group consisting of:

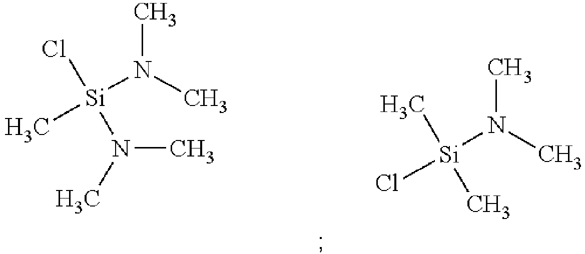

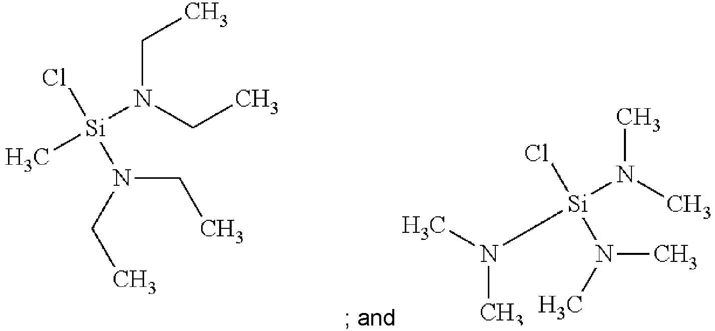

8. The process of at least one of the previous claims, wherein the living anionic elastomer is derived from at least one diene monomer and optionally at least one vinyl aromatic monomer.

9. The process of at least one of the previous claims, wherein the living anionic elastomer is derived from at least one of isoprene and butadiene, and optionally from styrene.

10. The process of at least one of the previous claims, wherein the living anionic elastomer is derived from butadiene and styrene.

11. A rubber composition comprising the functionalized polymer produced by the process of at least one of the previous claims.

12. The rubber composition of claim 12, further comprising silica.

13. A pneumatic tire comprising the rubber composition of claim 11 or 12.

14. A process for producing a functionalized polymer comprising: reacting a condensation suppressant comprising an alkoxysilane with an aminosilane functionalized polymer to form a stable functionalized polymer in the polymer cement.

15. The process of claim 14, wherein the alkoxysilane is selected from the group consisting of triethyloxy(octyl) silane and 3-(triethoxysilyl)propyl thiooctanoate.
